Europäisches Patentamt

**European Patent Office**

**Office européen des brevets**

(11) Publication number: **0 036 897**

**B1**

# EUROPEAN PATENT SPECIFICATION

(45) Date of publication of patent specification: **15.08.84**

(51) Int. Cl.³: **D 03 D 47/18, F 16 H 21/40**

(21) Application number: **80101644.5**

(22) Date of filing: **27.03.80**

(54) **Control device for reciprocating grippers in shuttleless looms.**

(43) Date of publication of application:
**07.10.81 Bulletin 81/40**

(45) Publication of the grant of the patent:
**15.08.84 Bulletin 84/33**

(84) Designated Contracting States:
**AT BE CH DE LU NL SE**

(56) References cited:
**FR - A - 1 341 916**
**FR - A - 1 370 335**
**GB - A - 1 404 126**
**US - A - 2 057 351**

(73) Proprietor: **ALAMAK S.A.**
**Boulevard de la Foire 13**
**Luxembourg (LU)**

(72) Inventor: **Mazzini, Mazzino**
**Via Serragliolo, 39**
**I-51031 Agliana(Pistoia) (IT)**

(74) Representative: **Staub, Gabriella, Dr.-Ing.**
**Baaderstrasse 3**
**D-8000 München 5 (DE)**

Courier Press, Leamington Spa, England.

## Description

This invention relates to a control device, particularly for reciprocating those grippers which, in shuttleless looms, are to insert the weft thread.

As is known, in shuttleless looms, the weft thread is inserted by means of two suitably designed grippers (sometimes called needles or darts, depending on their different shapes). During the long standstill phase of the comb and related opening of the shed, the two grippers, which are carried cantilever-fashion by the respective sides of the loom, are first moved toward each other, starting from either side, and then, after meeting at the center of the loom and handing over the weft thread, returned to the loom sides to allow the comb beating up.

Also known are shuttleless looms wherein each such gripper is secured at one end to a respective flexible belt, arranged to slide in a sort of arcuate guide. The two arcuate guides extend in a vertical plane lying parallel to the loom front and project out of said sides, and sometimes depend downwards from the loom, such as not to interfere with the oscillations of the sley to which the comb is mounted. Moreover, each belt is provided with a lengthwise series of slots, in mesh engagement with the teeth of a respective gear or toothed wheel which is driven to reciprocate rotatively in either directions, thereby the belt is moved out of the guide and the related gripper is brought to the loom center, and viceversa, the belt is withdrawn and the gripper moved back. Such an arrangement is shown in document FR - A - 1 370 335.

Numerous are the aspects of the types of control utilized in the past for such gear wheels which have failed to prove fully satisfactory. For example, with the currently employed controls, the belts of the weft inserting grippers do not have sufficiently low speeds and accelerations to ensure, at the gripper travel limit corresponding to the loom center, a correct transfer of the weft thread from one gripper to the other. Furthermore the bulk size of the looms is considerable, and so are the travel sections covered by the grippers during their return stroke after leaving the reed.

Other drawbacks are due to the conventional controls being less than entirely suitable for application to looms having, within a certain range, a front of different useful extension.

This invention sets out to obviate the cited shortcomings.

The invention is defined by the appended claim 1.

The features of the invention will be more clearly apparent from the description of a preferred, though not limitative, embodiment of this control, illustrated by way of example only in the accompanying drawing, where:

Figure 1 is a diagrammatical partial front view of a shuttleless loom;

Figure 2 is a detail view of a control according to this invention, as viewed from one side of the loom; and

Figure 3 is a partly sectional plan view of the control shown in Figure 2, as taken along the line III—III of Figure 2.

With reference to the drawing figures, the numeral 1 designates the reed of a shuttleless loom. A lower reinforcement 2 of the reed is attached to a sley, not shown, which can be oscillated, in a known manner, about a horizontal axis extending parallel to the loom front and being located between the two sides of the same. Parallel to each such side there extend a respective pair of vertical elements 3, which are also connected to that side externally thereto.

On the front, the reinforcement 2 has a threshold 2a, which is covered by a special gasket and upon which two grippers 4 and 5 are arranged to slide, which grippers are attached each to the top end of a respective belt 6. The grippers 4 and 5 serve for inserting the weft thread; the gripper 4 can be, for example, the one intended for picking up the weft thread, or pulling gripper, whilst the gripper 5 can fulfill the function of inserting and deliver the weft thread to the preceding gripper.

The belts 6 are flexible and arranged for sliding in a sort of guides or sheathes 7, which extend in a common plane parallel to the loom front. Starting from its top end, contiguous to a respective end of the reed 1, each guide 7 has a rectilinear section or portion which, outside of the related loom side, extends downwards into an arcuate section or portion, which may be terminated with a lower or bottom rectilinear section facing the loom center.

The belts 6 are flattened horizontally, parallel to the loom sides. Each belt is provided with a lengthwise series of slots which are distributed at regular intervals. With the slots in one series, their mesh engages a gear or toothed wheel 8 which is keyed to one end of a related shaft 9. Each shaft 9 is carried pivotally by a bearing 10 which is laid horizontal and parallel to the vertical elements 3 in the proximity of the top end of the respective guide 7, through which passes the wheel 8 to mesh with the related belt 6.

At the end of each shaft 9 remote from the gear wheel 8, there is keyed a bevel pinion gear 11 which meshes with a portion of a bevel gear 12a, secured to a sector 12b. Each toothed sector or gear segment 12a-b is journalled between the respective pair of vertical elements 3; it is, in fact, secured to a pin 13 which is carried pivotally by said vertical elements 3 and is perpendicular thereto.

The pair of vertical elements 3 also carries a second pin 14, parallel and coplanar with the pin 13 but located, with respect to the pin 13, on the side remote from the wheel 8. The second pin 14 acts as the pivot for a rocker arm 15. In particular, the second pin 14 has an eccentric portion 14a which acquires variable distance from the pin 13 depending on the angular position in which the second pin 14 is locked with respect to the vertical elements 3. With the interposition of a bushing, the rocker arm 15 is mounted pivotally to the portion 14a, thereby its pivot is at an adjustable distance from the portion 13 of the gear sector 12a-b.

To the terminating pin 17 of the rocker arm 15 there articulate the small end of a connecting rod 18 and a slider 19, which is slot linked at 20 to the sector 12b, the slot link extending along the bisecting line of said sector. Thus, the rocker arm 15 follows the oscillations of the gear sector 12a-b in the same direction. The big end of the connecting rod 18 is articulated to a second pin 21 of a crank 22 which is keyed to one end of a shaft 23. The shaft 23, extending parallel to the loom front and located between the sides of the same, is driven to complete one revolution per cycle of the loom. The crank mechanisms 22—18, located at the ends of the shaft 23 and being driven thereby, convert the rotary motion of the shaft 23 into a reciprocating movement of the respective gear sectors 12a-b and respective wheels 8, such that while one wheel turns in one direction the other turns in the opposite direction.

The control described in the foregoing operates as follows.

When the reed 1 is at a standstill in the position where its lower reinforcement is aligned with the top sections of the guides 7, the belts 6 are controlled to move out of the same and insert the grippers 4 and 5 through the warp thread shed. The grippers reach as far as the center of the loom, and the gripper 5 delivers the weft thread to the gripper 4. At this stage, the wheels 8 reverse their rotations and control the belts 6 to move back into the guides 7, thereby the grippers are withdrawn. As the grippers withdrawn from the reed 2, the reed rapidly completes its oscillation to beat in the weft inserted in the fabric and then returns to its condition in alignment with the top sections of the guides 7. The simultaneous engagement of the slotted link 20 of the sector 12b by the rocker arm 15 and conrod 18 of the crank mechanism, as driven by the cyclic shaft 23, produces the aforesaid favourable laws of motion of the grippers 4 and 5 at their end of stroke positions, respectively at the center and sides of the loom.

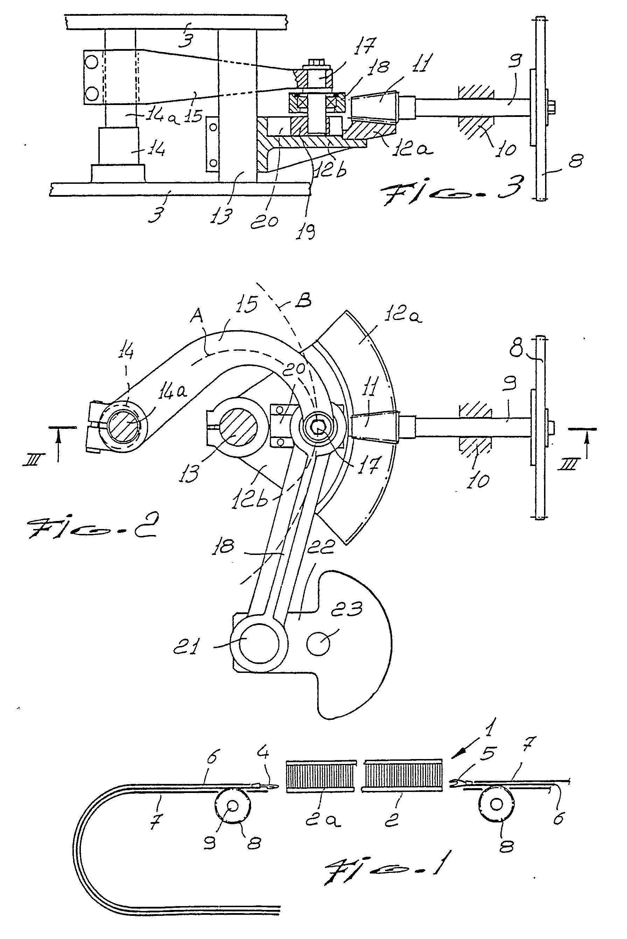

It should be observed that these favourable laws of motion are determined by the fact that, whereas in the position indicated in Figure 2 of the pin 17 a material point of the sector 12b lying at the considered moment on the axis of the pin 17 is moved subsequently along a path coinciding with the circular arc A the radius of which converges towards the center of the pin 13, instead the pin 17 itself is moved subsequently to the considered moment along a path coinciding with the circular arc B the radius of which converges towards the center of the pivot 14a and is therefore greater than the radius of the circular arc A. Consequently near the two dead points of the oscillation of the sector 12b the law of motion is determined by the greater radius of the circular arc B so that on the one hand there is obtained a reduction of the stroke of the grippers, which otherwise would have been greater, and on the other side a variation of the speed and of the accelerations is obtained during the stroke, which variations favour the gripping and the releasing action of the weft performed by the grippers.

It should be further noted that the adjustment of the angular position of the pin 14, and accordingly of the distance of the pivot 14a of the rocker arm 15 from the pivot 13 of the gear sector 12a-b, affords the possibility of using one and the same control even though the useful width of the loom may vary within limits.

Thus, the invention as described achieved its objects.

## Claims

1. A control device for the reciprocating movement of weft inserters (6), carrying the weft thread insertion grippers (4, 5), in shuttleless looms, wherein each weft inserter (6) is driven by a respective gear wheel (8) and wherein, between at least one of the said gear wheels (8) and a connecting rod and crank assembly (18, 22) driven by a cyclic shaft (23) of the shuttleless loom, a gear sector (12b) oscillating about an axis (13) drives said gear wheel (8), characterized in that said gear sector (12b) has substantially along a bisecting line thereof a slotted link type coupling (17, 20) including a slider (19), said slider being articulated (17) both with an end of the said connecting rod (18) and with a rocker arm (15) which is moveable about an axis (14) parallel to the said axis (13) of said oscillating gear sector and spaced therefrom, thereby to guide the movement of said connecting rod (18) end.

2. A control device according to Claim 1, characterized in that said rocker arm (15) has a pin (17) to which said slider (19) and said connecting rod (18) are articulated, said rocker arm pivot (14) has an eccentric portion (14a) at an adjustable distance from the pin (13) of the gear sector (12b), the angular position of said eccentric portion being adjustable.

## Revendications

1. Dispositif de commande pour le mouvement alternatif des rubans d'insertion de trame (6) comprenant les pinces (4, 5) d'introduction de la trame dans les métiers à tisser sans navette, dans lequel chaque ruban (6) est entraîné par une roue dentée (8) et dans lequel entre au moins l'une des roues dentées et un groupe bielle/manivelle (18, 22) actionné par un arbre cyclique (23) du métier sans navette, un secteur denté (12b) oscillant autour d'un axe (13) entraîne ladite roue dentée, caractérisé en ce que ledit secteur denté (12b) présente sensiblement le long d'une ligne bissectrice un accouplement à coulisse/coulisseau (17, 20) avec un coulisseau (19), ce coulisseau (19) étant articulé au pied de la bielle (18) et à un balancier (15) qui est mobile autour d'un axe (14) qui est parallèle audit axe (13) du secteur denté oscillant et distancé de celui-ci, afin de guider le mouvement du pied de bielle (18).

2. Dispositif de commande selon la revendication 1, caractérisé en ce que le balancier (15) comporte un tourillon (17) auquel sont articulés le coulisseau (19) et la bielle (18), l'axe (14) de ce balancier étant pourvu d'une portion excentrique (14a) à une distance ajustable de l'axe (13) du secteur denté (12b), la position angulaire de cette portion excentrique étant ajustable.

**Patentansprüche**

1. Antriebsvorrichtung zur Hin- und Herbewegung von Fadeneinlegern (6), welche die Einschlagfadengreifer (4, 5) bei schiffchenlosen Webstühlen tragen, wobei jeder Fadeneinleger (6) von jeweils einem Zahnrad (8) angetrieben wird und wobei, zwischen mindestens einem der genannten Zahnräder (8) und einer, von einer sich drehenden Welle (23) des Webstuhls angetriebener Verbindungspleuel/Kurbeleinheit (18, 22), ein um eine Achse (13) schwingendes Zahnradsegment (12b) das genannte Zahnrad (8) antreibt, dadurch gekennzeichnet, dass das genannte Zahnradsegment (12b), im wesentlichen entlang seiner Winkelhalbierenden, eine Schlitzgelenkkupplung (17, 20) mit einem Gleitstück (19) aufweist, wobei dieses Gleitstück (19) sowohl an der Extremität des genannten Verbindungspleuels (18) als auch an einer Schwinge (15), welche um eine zur Achse (13) des genannten schwingenden Zahnradsegmentes parallele und von dieser Achse (13) abliegenden Welle (14) beweglich ist, angelenkt ist, wodurch die Bewegung der Extremität genannten Verbindungspleuels (18) geführt wird.

2. Antriebsvorrichtung nach Anspruch 1, dadurch gekennzeichnet, dass die genannte Schwinge (15) einen Bolzen (17) aufweist, an welchen das genannte Gleitstück (19) und das genannte Verbindungspleuel (18) angelenkt sind, dass die genannte Achse (14) der Schwinge einen exzentrischen Abschnitt (14a) in einer adjustierbaren Entfernung vom Bolzen (13) des Zahnradsegmentes (12b) aufweist, wobei die Winkelstellung des genannten exzentrischen Abschnittes adjustierbar ist.

0 036 897

Fig. 3

Fig. 2

Fig. 1

1